# EUROPEAN PATENT SPECIFICATION

(11) **EP 4 447 343 B1**
(45) Date of publication and mention of the grant of the patent: **13.08.2025**
(21) Application number: 24168904.1
(22) Date of filing: 08.04.2024
(51) Int. Cl.: H04B 13/02

(54) **UNDERWATER OPTICAL WIRELESS COMMUNICATION DEVICE**
OPTISCHE DRAHTLOSE UNTERWASSERKOMMUNIKATIONSVORRICHTUNG
DISPOSITIF DE COMMUNICATION SANS FIL OPTIQUE SOUS-MARIN

(30) Priority: 10.04.2023 JP 2023063595
(43) Date of publication of application: 16.10.2024
(73) Proprietor: Shimadzu Corporation, Nakagyo-ku, Kyoto-shi, Kyoto 604-8511 (JP)
(72) Inventor: SEO, Shinnosuke, Kyoto-shi, Kyoto, 604-8511 (JP)
(74) Representative: Müller-Boré & Partner Patentanwälte PartG mbB

(56) References cited:
- WO-A1-2022/074582
- KR-B1- 102 328 882
- US-A1- 2012 090 385

## Description

### BACKGROUND OF THE INVENTION

### Field of the Invention

The present invention relates to an underwater optical wireless communication device.

### Description of the Related Art

The following description sets forth the inventor's knowledge of the related art and problems therein and should not be construed as an admission of knowledge in the prior art.

Conventionally, an underwater optical wireless communication device is known. Such a device is disclosed in, for example, Japanese Unexamined Patent Application Publication No. 2017-228889.

The above-described Japanese Unexamined Patent Application Publication No. 2017-228889 discloses an underwater optical wireless communication device equipped with a first underwater communication device and a second underwater optical wireless communication device. The first underwater communication device is equipped with an irradiation unit that irradiates visible light, a light receiver that receives visible light, and a controller that controls the irradiation unit and the light receiver. The second underwater communication device is equipped with an irradiation unit that irradiates visible light, a light receiver that receives visible light, and a controller that controls the irradiation unit and the light receiver. The first underwater communication device is configured to communicate with the second underwater communication device by receiving visible light emitted from the second light receiving device.

Here, although not disclosed in the above-described Japanese Unexamined Patent Application Publication No. 2017-228889, depending on the position (depth) where the first underwater communication device (underwater optical wireless communication device) is placed, ambient light other than communication light may be incident to the underwater optical wireless communication device, together with visible light (communication light). In other words, in the light receiver (first light receiver) of an underwater optical wireless communication device, both communication light and ambient light may be received in the case where the depth at which the underwater optical wireless communication device is located is shallow.

Moreover prior art document WO2022074582 discloses an underwater optical wireless system comprising several photo-detectors with different photo-sensitivity wherein, with a switch, the receiver selects the photo-detectors which can pass a wavelength range that is different from the ambient light to effectively filter out ambient light and controls the gain of the amplifier depending on the switch position.

In this case, there is an inconvenience that the ambient light received together with the communication light interferes with communication by the communication light. Therefore, there is a need for an underwater optical wireless communication device that can suppress the interference of communication light by ambient light even when ambient light is received together with communication light.

### SUMMARY OF THE INVENTION

The present invention has been made to solve the above problems. One object of the present invention is to provide an underwater optical wireless communication device capable of suppressing interference of communication by communication light due to ambient light, even when ambient light is received together with communication light.

In order to attain the above-described objects, an underwater optical wireless communication device includes:
a first light receiver configured to receive communication light emitted from another wireless communication device;
a second light receiver configured to receive ambient light, which is light other than the communication light; and
a controller configured to perform control to adjust a gain of the first light receiver, based on intensity of the communication light received by the first light receiver and intensity of the ambient light received by the second light receiver.

In the underwater optical wireless communication device according to one aspect of the present invention, it is equipped with a controller that performs control to adjust the gain of the first light receiver based on the intensity of the communication light received by the first light receiver and the intensity of the ambient light received by the second light receiver, as described above.

With this, the gain of the first light receiver is adjusted based on the intensity of the communication light received by the first light receiver and the intensity of the ambient light received by the second light receiver, so that the amplitude of the communication light can be increased when the ambient light is strong. Therefore, it becomes possible to increase the ratio of the amplitude of the communication light to the noise due to ambient light included in the communication light, thereby improving the S/N ratio of the communication light. As a result, even in the case where ambient light is received together with the communication light, it is possible to suppress the communication by the communication light 90 from being interfered with by the ambient light.

The above and/or other aspects, features and/or advantages of various embodiments will be further appreciated in view of the following description in conjunction with the accompanying figures. Various embodiments can include and/or exclude different aspects, features and/or advantages where applicable. In addition, various embodiments can combine one or more aspect or feature of other embodiments where applicable. The descriptions of aspects, features and/or advantages of particular embodiments should not be construed as limiting other embodiments or the claims.

### BRIEF DESCRIPTION OF THE DRAWINGS

The preferred embodiments of the present disclosure are shown by way of example, and not limitation, in the accompanying figures.
FIG. 1 is a schematic diagram of an underwater optical wireless communication system equipped with a first underwater optical wireless communication device according to one embodiment.
FIG. 2 is a block diagram schematically showing a first underwater optical wireless communication device according to one embodiment.
FIG. 3 is a block diagram schematically showing a second underwater optical wireless communication device according to one embodiment.
FIG. 4 is a schematic diagram for explaining the configuration for the gain of the first light receiver in the first underwater optical communication device.
FIG. 5 is a graph for explaining the current signal output by the first light receiver before adjusting the gain of the first light receiver.
FIG. 6 is a graph for explaining the current signal output by the first light receiver after adjusting the gain of the first light receiver.
FIG. 7 is a graph for explaining the current signal output by the first light receiver before adjusting the gain of the first light receiver which includes a plurality of light receiving elements with reduced areas.
FIG. 8 is a graph for explaining the current signal output by the first light receiver before adjusting the gain of the first light receiver which includes a plurality of light receiving elements with reduced areas.
FIG. 9 is a graph for explaining the voltage signal based on communication light including the offset due to ambient light.
FIG. 10 is a graph for explaining the voltage signal based on communication light excluding the offset due to ambient light.
FIG. 11 is a graph for explaining the voltage signal after adding the plurality of voltage signals based on communication light excluding the offset due to ambient light.
FIG. 12 is a flowchart for explaining the processing of acquiring the communication light signal.
FIG. 13 is a flowchart for explaining the processing for adjusting the gain of the first light receiver.

### DETAILED DESCRIPTION OF THE PREFERRED EMBODIMENTS

In the following paragraphs, some preferred embodiments of the present disclosure will be described by way of example and not limitation. It should be understood based on this disclosure that various other modifications can be made by those in the art based on these illustrated embodiments.

Hereinafter, some embodiments in which the present invention is embodied will be described based on the attached drawings.

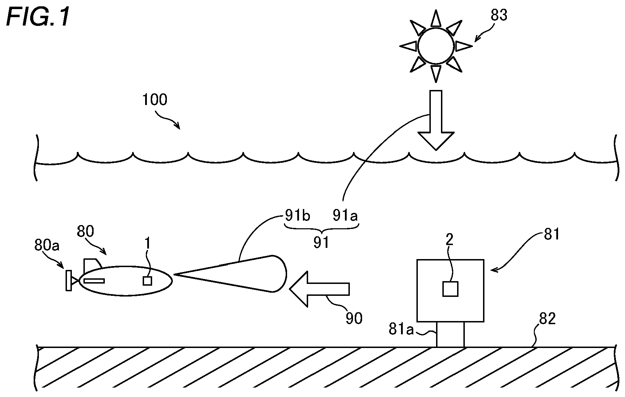

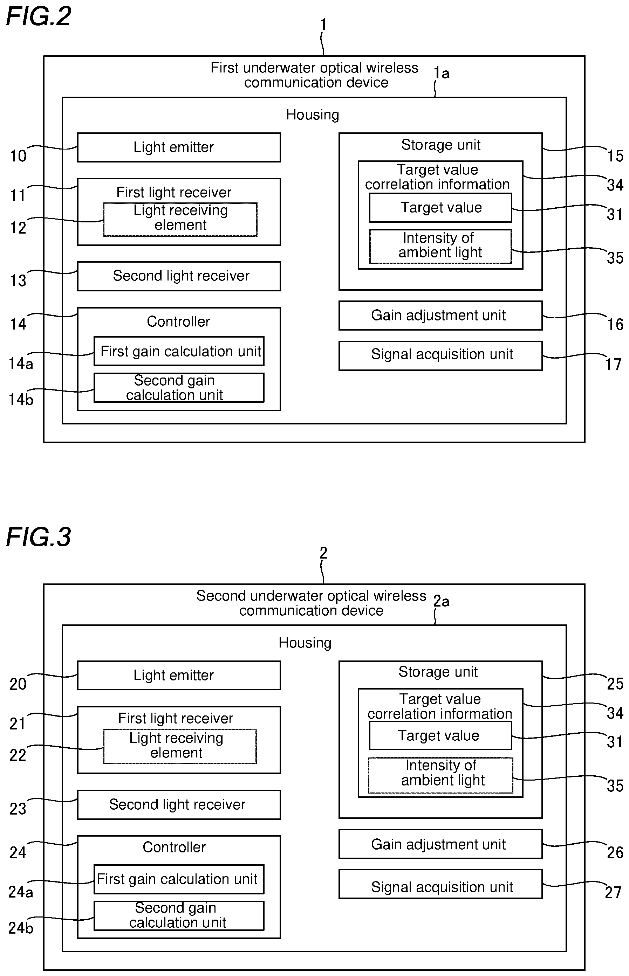

Referring to FIG. 1 and FIG. 2, the configuration of an underwater optical wireless communication system 100 equipped with a first underwater optical wireless communication device 1 and a second underwater optical wireless communication device 2 according to one embodiment will be described.

As shown in FIG. 1, the underwater optical wireless communication system 100 is equipped with a first underwater optical wireless communication device 1 and a second underwater optical wireless communication device 2. The first underwater optical wireless communication device 1 and the second underwater optical wireless communication device 2 are configured to perform bidirectional optical communication simultaneously. The underwater optical wireless communication system 100 is used for inspecting underwater structures, such as offshore wind generators and fish preserves.

The first underwater optical wireless communication device 1 is located underwater. Specifically, the first underwater optical wireless communication device 1 is installed on an underwater moving body 80. The moving body 80 includes, for example, an AUV (Autonomous Underwater Vehicle). Further, the moving body 80 is equipped with a propulsion mechanism 80a. Further, the moving body 80 is configured to emit illumination light 91b.

The propulsion mechanism 80a is configured to provide propulsion to the moving body 80 under the control of the controller 14 (see FIG. 2). The propulsion mechanism 80a includes, for example, a propeller (not illustrated) and a drive source (not illustrated) that drives the propeller. The propulsion mechanism 80a may be a so-called screw configuration, which obtains propulsion by stirring water by rotating a propeller, or a so-called water jet propulsion mechanism, which obtains propulsion by jetting a high-pressure stream of water backward.

The second underwater optical wireless communication device 2 is located underwater. Specifically, the second underwater optical wireless communication device 2 is installed on a fixed body 81 fixed underwater. The fixed body 81 is fixed underwater by being installed on the seabed 82 via a holding member 81a.

Note that, as shown in FIG. 1, the first underwater optical wireless communication device 1 and the second underwater optical wireless communication device 2 communicate using communication light 90 in an environment where ambient light 91 is incident. Ambient light 91 includes, for example, sunlight 91a emitted from the sun 83 and illumination light 91b emitted from the moving body 80. In other words, the first underwater optical wireless communication device 1 and the second underwater optical wireless communication device 2 perform wireless communication using the communication light 90 at a relatively shallow depth.

As shown in FIG. 2, the first underwater optical wireless communication device 1 is equipped with a light emitter 10, a first light receiver 11, a second light receiver 13, and a controller 14. Further, in this embodiment, the first underwater optical wireless communication device 1 is equipped with a storage unit 15. Further, the first underwater optical wireless communication device 1 is equipped with a gain adjustment unit 16 and a signal acquisition unit 17.

The light emitter 10 is configured to emit the communication light 90 (see FIG. 1) as optical signal light. The communication light 90 is light with a center wavelength band of blue or violet. The blue wavelength band is a wavelength band in the range of 435 nm to 480 nm. Further, the purple wavelength band is a wavelength band in the range of 400 nm to 435 nm. The light emitter 10 includes a semiconductor laser light source or an LED (Light Emitting Diode). Note that the signal light is the light used to transmit information by changing the intensity of the light source at a predetermined time.

The first light receiver 11 is configured to receive the communication light 90 emitted from another wireless communication device (the second underwater optical wireless communication device 2 (see FIG. 1)). In this embodiment, the first light receiver 11 includes a photomultiplier tube. Further, in this embodiment, the first light receiver 11 includes a plurality of light receiving elements 12. That is, each of the plurality of light receiving elements 12 is a photomultiplier tube. Note that the first light receiver 11 is equipped with a filter (not illustrated) for removing light in wavelength bands other than the communication light 90. Therefore, the first light receiver 11 receives light in a wavelength band equal to the wavelength band of the communication light 90.

Note that the ambient light 91 includes light of various wavelength bands. Therefore, a part of the ambient light 91 passes through the filter to remove light in wavelength bands other than the communication light 90, and is received by the first light receiver 11 together with the communication light 90.

The second light receiver 13 is configured to receive ambient light 91, which is light other than the communication light 90. In this embodiment, the second light receiver 13 includes a photodiode capable of receiving light with a higher intensity than that of the photomultiplier tube.

Note that the second light receiver 13 is equipped with a filter (not illustrated) for removing light in wavelength bands other than the communication light 90. Therefore, the second light receiver 13 receives ambient light 91 other than the communication light 90.

The controller 14 is configured to perform control of the various parts of the first underwater optical wireless communication device 1 and control of the movement of the moving body 80 (see FIG. 1). Further, the controller 14 is configured to control the adjustment of the gain of the first light receiver 11. The controller 14 is a computer configured to include a processor, such as a CPU (Central Processing Unit) and circuitry, a ROM (Read Only Memory), and a RAM (Random Access Memory). Further, the controller 14 includes a first gain calculation unit 14a and a second gain calculation unit 14b as functional blocks. The controller 14 functions as a controller that controls each part of the first underwater optical wireless communication device 1 and the moving body 80 by having the CPU execute predetermined control programs. The details of the configuration in which the controller 14 adjusts the gain of the first light receiver 11 will be described below.

The first gain calculation unit 14a and the second gain calculation unit 14b are configured as functional blocks in software, which are realized by the controller 14 executing various programs stored in the storage unit 15. The first gain calculation unit 14a and the second gain calculation unit 14b may be configured by separate hardware with a dedicated processor (processing circuit). The details of the functions of the first gain calculation unit 14a and the details of the functions of the second gain calculation unit 14b will be described below.

The storage unit 15 stores various programs to be executed by the controller 14. Further, the storage unit 15 is configured to store the target value correlation information 34. The storage unit 15 includes a non-volatile storage device, such as an HDD (Hard Disk Drive) and an SSD (Solid State Drive).

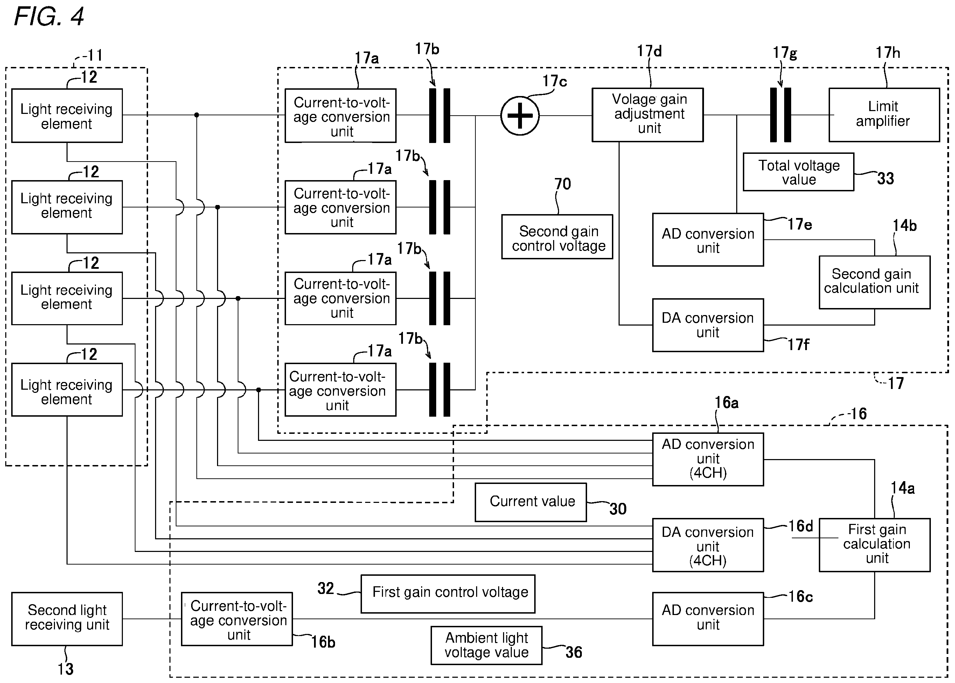

The target value correlation information 34 is information indicating the correlation between the target value 31 of the current value 30 (see FIG. 4), which is based on the intensity of the communication light 90, received by the first light receiver 11 and the intensity 35 of the ambient light 91. In this embodiment, the storage unit 15 is configured to store the target value correlation information 34 in the form of a data table. Note that the format for storing the target value correlation information 34 is not restricted as long as it is information that indicates the correlation between the target value 31 of the current value 30, which is based on the intensity of the communication light 90, and the intensity 35 of the ambient light 91. Further, the target value correlation information 34 is acquired experimentally in advance and stored in the storage unit 15.

The gain adjustment unit 16 is configured to adjust the gain of the first light receiver 11 under the control of the controller 14. The details of the configuration of the gain adjustment unit 16 and the details of the configuration in which the gain adjustment unit 16 adjusts the gain of the first light receiver 11 will be described below.

The signal acquisition unit 17 is configured to acquire a signal based on the communication light 90 received by the first light receiver 11 under the control of the controller 14. The details of the configuration of the signal acquisition unit 17 and the details of the configuration in which the signal acquisition unit 17 acquires the signal will be described below.

Further, in this embodiment, the first underwater optical wireless communication device 1 is equipped with a housing 1a. The housing 1a houses the light emitter 10, the first light receiver 11, the second light receiver 13, the controller 14, the storage unit 15, the gain adjustment unit 16, and the signal acquisition unit 17. The first light receiver 11 and the second light receiver 13 are each provided at a position in the housing 1a where the incident direction of the ambient light 91 is equal. Further, each of the plurality of light receiving elements 12 is installed in the housing 1a so that the incident angle of the incident light becomes approximately equal.

Further, in this embodiment, the first underwater optical wireless communication device 1 is equipped with a window (not illustrated) that transmits the communication light 90 emitted from the light emitter 10, a window (not illustrated) that transmits the light irradiated onto the first light receiver 11, and a window (not illustrated) that transmits the light irradiated onto the second light receiver 13. Each window is formed, for example, of an acrylic or glass plate.

As shown in FIG. 3, the second underwater optical wireless communication device 2 is equipped with a light emitter 20, a first light receiver 21, a second light receiver 23, a controller 24, a storage unit 25, a gain adjustment unit 26, and a signal acquisition unit 27. The second underwater optical wireless communication device 2 has the same configuration as the first underwater optical wireless communication device 1 (see FIG. 2), except that it is installed in a fixed body 81 (see FIG. 1).

That is, the light emitter 20, the first light receiver 21, the second light receiver 23, the controller 24, the storage unit 25, the gain adjustment unit 26, and the signal acquisition unit 27 are respectively the same configuration as the light emitter 10 (see FIG. 1), the first light receiver 11 (see FIG. 1), the second light receiver 13 (see FIG. 1), the controller 14 (see FIG. 1), the storage unit 15 (see FIG. 1), the gain adjustment unit 16 (see FIG. 1), and the signal acquisition unit 17 (see FIG. 1). The first light receiver 21 is composed of a plurality of light receiving elements 22. The configuration of the light receiving element 22 is similar to that of the light receiving element 12. Further, the controller 24 includes a first gain calculation unit 24a and a second gain calculation unit 24b as functional blocks. Further, the storage unit 25 is configured to store the target value correlation information 34.

### (Acquisition of Communication Light Signal)

Next, referring to FIG. 4, the configuration in which the first underwater optical wireless communication device 1 (see FIG. 2) acquires the signal of the communication light 90 (see FIG. 1) will be described. The first underwater optical wireless communication device 1 acquires the signal of the communication light 90 by the gain adjustment unit 16 and the signal acquisition unit 17 under the control of the controller 14 (see FIG. 2).

As shown in FIG. 4, the gain adjustment unit 16 includes an AD conversion unit 16a, a current-to-voltage conversion unit 16b, an AD conversion unit 16c, and a DA conversion unit 16d. The AD conversion unit 16a is configured to acquire a current value 30 amplified by the gain based on the intensity of the communication light 90 received by the first light receiver 11. The AD conversion unit 16a and the AD conversion unit 16c include, for example, an AD conversion unit that converts an analog current value to a digital current value. Further, the current-to-voltage conversion unit 16b includes, for example, a current-to-voltage conversion unit. The DA conversion unit 16d includes a DA conversion unit that converts a digital voltage value to an analog voltage value.

Note that the AD conversion unit 16a is an example of the "current value acquisition unit" as recited in claims. Since the first light receiver 11 includes a plurality of light receiving elements 12, the AD conversion unit 16a and the DA conversion unit 16d include the number of channels corresponding to the number of light receiving elements 12. In this embodiment, since the first light receiver 11 includes four light receiving elements 12, each of the AD conversion unit 16a and the DA conversion unit 16d includes four channels.

Further, as shown in FIG. 4, the signal acquisition unit 17 includes a current-to-voltage conversion unit 17a, a DC component removal unit 17b, a voltage adding unit 17c, a voltage gain adjustment unit 17d, an AD conversion unit 17e, a DA conversion unit 17f, a DC component removal unit 17g, and a limit amplifier 17h. The current-to-voltage conversion unit 17a includes, for example, a current-to-voltage conversion unit. Further, the DC component removal unit 17b and the DC component removal unit 17g each include a capacitor. The voltage adding unit 17c includes a voltage adding circuit. Further, the voltage gain adjustment unit 17d includes a gain adjustment circuit. Further, the AD conversion unit 17e includes an AD conversion unit that converts an analog voltage value to a digital voltage value. The DA conversion unit 17f includes a DA conversion unit that converts a digital voltage value to an analog voltage value.

The signal acquisition unit 17 converts the current signal of the current received and output by the first light receiver 11 into a voltage signal to acquire the signal of the communication light 90. Further, the gain adjustment unit 16 processes the current output from the first light receiver 11 as a signal of the communication light 90 and adjusts the gain of the first light receiver 11.

As shown in FIG. 4, each of the plurality of light receiving elements 12 outputs a current of a current value 30 corresponding to the intensity of the received communication light 90. The current output from each of the plurality of light receiving elements 12 is input to the AD conversion unit 16a and the current-to-voltage conversion unit 17a.

In this embodiment, the current-to-voltage conversion unit 17a includes a plurality of current-to-voltage conversion units corresponding to the number of the plurality of light receiving elements 12. Further, the DC component removal unit 17b includes a plurality of DC component removal units corresponding to the number of the plurality of light receiving elements 12.

The current-to-voltage conversion unit 17a changes the current output from each of the plurality of light receiving elements 12 into a voltage. From each of the voltage signals converted by the current-to-voltage conversion unit 17a, its DC component is removed by the corresponding DC component removal unit 17b. The light received by the first light receiver 11 includes communication light 90 and ambient light 91. Since the ambient light 91 is composed of a DC component, the voltage signal of the communication light 90 can be acquired by removing the DC component with the DC component removal unit 17b. Thereafter, the voltage signals of the communication light 90 will be added by the voltage adding unit 17c. The voltage signal of the communication light 90 after being added by the voltage adding unit 17c is input to the limit amplifier 17h after the DC component is removed by the DC component removing unit 17g. The voltage signal of the communication light 90 input to the limit amplifier 17h is converted to a predetermined amplitude and output to the controller 14. In this way, the signal of the communication light 90 is acquired.

Note that in this embodiment, the second gain calculation unit 14b is configured to control the voltage gain adjustment unit 17d to adjust the amplification ratio of the voltage signal of the communication light 90 that is input to the limit amplifier 17h. Specifically, the second gain calculation unit 14b acquires the total value 33 of the voltages, which is converted to a digital value in the AD conversion unit 17e, output from the voltage gain adjustment unit 17d.

The second gain calculation unit 14b applies a control voltage to the voltage gain adjustment unit 17d so that the total value 33 of the voltages falls within the input allowable voltage range of the limit amplifier 17h. Specifically, the second gain calculation unit 14b applies the analog second gain control voltage 70, which is digital-to-analog converted by the DA conversion unit 17f, to the voltage gain adjustment unit 17d. The voltage gain adjustment unit 17d adjusts the gain of the output voltage based on the applied second gain control voltage 70. In other words, the second gain calculation unit 14b controls the voltage gain adjustment unit 17d by means of feedback control such as a PID (Proportional Integral Differential) control.

Here, the intensity of the sunlight 91a (FIG. 1) emitted from the sun 83 (FIG. 1) and the intensity of the illumination light 91b (FIG. 1) emitted from the moving body 80 (FIG. 1) are greater than the intensity of the communication light 90. Therefore, when the ambient light 91, such as the sunlight 91a and the illumination light 91b, is received together with the communication light 90, the ratio of the intensity of the communication light 90 among the intensities of the light received by the first light receiver 11 becomes small. Consequently, when the ambient light 91 is received together with the communication light 90, the wireless communication using the communication light 90 is interfered with.

### (Gain Adjustment of First Light-Receiver)

Therefore, in this embodiment, even in the case where the ambient light 91 is received together with the communication light 90, the controller 14 (see FIG. 2) is configured to control so that wireless communication using the communication light 90 can be performed between the first underwater optical wireless communication device 1 and the second underwater optical wireless communication device 2. Note that the controller 24 (see FIG. 3) also performs control when the ambient light 91 is received together with the communication light 90, using the same configuration as the controller 14. Therefore, the control in the case where the ambient light 91 is received together with the communication light 90 will be described with reference to the controller 14.

In this embodiment, the controller 14 (first gain calculation unit 14a) is configured to perform control to adjust the gain of the first light receiver 11 based on the intensity of the communication light 90 received by the first light receiver 11 and the intensity 35 (see FIG. 2) of the ambient light 91 received by the second light receiver 13. Specifically, in this embodiment, the first gain calculation unit 14a is configured to perform control to adjust the gain of the first light receiver 11 based on the intensity 35 of the ambient light 91 received by the second light receiver 13 such that the current value 30, which is based on the intensity of the communication light 90, acquired by the AD conversion unit 16a approaches the preset target value 31 (see FIG. 2).

As shown in FIG. 4, the controller 14 is configured to adjust the gain of the first light receiver 11 by controlling the gain adjustment unit 16. Note that in the example shown in FIG. 4, the first light receiver 11 (see FIG. 2) includes four light receiving elements 12 as a plurality of light receiving elements 12. The AD conversion unit 16a converts the current value 30 of the current output from each of the plurality of light receiving elements 12 from an analog value to a digital value. The AD conversion unit 16a then outputs the current value 30, which is converted to a digital value, to the first gain calculation unit 14a.

Further, the first gain calculation unit 14a acquires the intensity 35 of the ambient light 91. Specifically, the first gain calculation unit 14a acquires the ambient light voltage value 36 converted by the current-to-voltage conversion unit 16b. Note that the first gain calculation unit 14a acquires the ambient light voltage value 36 that has been converted from a digital value to an analog value by the AD conversion unit 16c.

The first gain calculation unit 14a acquires the first gain control voltage 32 to be applied to each of the plurality of light receiving elements 12 based on the current value 30, the ambient light voltage value 36, and the target value correlation information 34 (see FIG. 2) stored in the storage unit 15 (see FIG. 2). The first gain calculation unit 14a applies the acquired first gain control voltage 32 to each of the plurality of light receiving elements 12. In other words, in this embodiment, the first gain calculation unit 14a is configured to perform control to adjust the target value 31 based on the intensity 35 of the ambient light 91 received by the second light receiver 13 and the target value correlation information 34.

Note that in this embodiment, the first gain calculation unit 14a is configured to perform gain control to adjust the gain of the first light receiver 11 by adjusting the first gain control voltage 32 applied to the first light receiver 11 so that the current value 30 based on the intensity of the communication light 90 received by the light receiver 11 approaches the set target value 31. In other words, the first gain calculation unit 14a is configured to adjust the gain of the first light receiver 11 by performing a feedback control such as a PID control, which is based on the current value 30, based on the intensity of the communication light 90, the target value 31, and the intensity 35 of the ambient light 91.

Further, in this embodiment, the first gain calculation unit 14a is configured to perform control to independently adjust the gain of each of the plurality of light receiving elements 12 based on the current value 30, which is based on the intensity of the communication light 90, received by each of the plurality of light receiving elements 12, the target value 31, and the intensity 35 of the ambient light 91. Note that in the case where the intensity 35 of the ambient light 91 is high, the first gain calculation unit 14a is configured to perform control to increase the target value 31, and in the case where the intensity 35 of the ambient light 91 is low, the controller is configured to perform control to decrease the target value 31.

As described above, the controller 14 is configured to perform control to acquire the total value 33 of the voltages output from the plurality of light receiving elements 12 after the gain adjustment and converted by the plurality of current-to-voltage conversion units 17a as the signal of the communication light 90. Therefore, even in cases where the ambient light 91 is received together with the communication light 90, it is possible to perform communication using the signal based on the communication light 90 by adjusting the gain of the first light receiver 11 (each of the plurality of light receiving elements 12) in accordance with the intensity 35 of the ambient light 91.

### (Current Value Before Gain Adjustment)

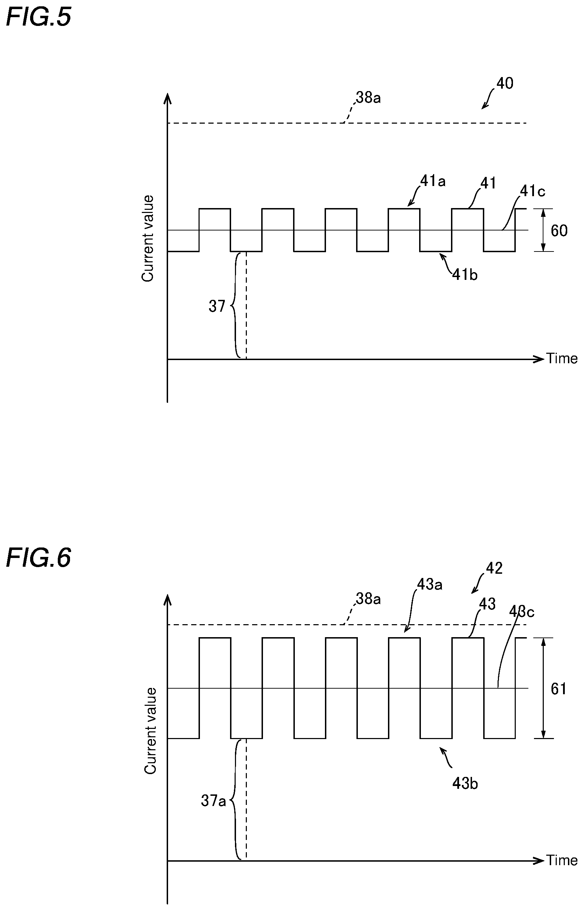

The graph 40 shown in FIG. 5 is a graph showing the current signal 41 of the current output from the first light receiver 11 (see FIG. 4) before performing the gain adjustment. In the graph 40, the vertical axis represents the current value, and the horizontal axis represents the time.

The signal based on the communication light 90 (see FIG. 1) transmits information by turning the communication light 90 on and off. For this reason, as shown in the graph 40, the current signal 41 based on the current output from the first light receiver 11 before the gain adjustment is a so-called pulse signal with a peak portion 41a and a valley portion 41b. Note that in the case of communication using light, the communication by the communication light 90 is carried out at a communication speed of several tens of Mbps. Therefore, the intensity of the average value 41c of the current signal 41 is treated as the intensity of the current signal 41. Note that in this embodiment, the first gain calculation unit 14a (see FIG. 4) is configured to perform control to adjust the gain of the first light receiver 11 so that the average value 41c of the current signal 41 approaches a set target value 31 (see FIG. 2).

When the ambient light 91 (see FIG. 1) is received together with the communication light 90, the current signal 41 is offset by the current value 37 corresponding to the intensity 35 of the ambient light 91 (see FIG. 2), as shown in the graph 40. Therefore, in the case where the gain of the first light receiver 11 is adjusted without considering the intensity 35 of the ambient light 91, the current signal 41 based on the current output from the first light receiver 11 after the gain adjustment may exceed the rated current 38a.

### (Current Value After Gain Adjustment)

Therefore, in this embodiment, in the case where the intensity 35 of the ambient light 91 is high, and the first gain calculation unit 14a performs control to increase the target value 31, it is configured to perform the control of the target value 31 so that the current value 30 output from the first light receiver 11 becomes less than or equal to the rated current 38a of the first light receiver 11.

The graph 42 shown in FIG. 6 shows the current signal 43 of the current output from the first light receiver 11 (see FIG. 2) after the gain adjustment. In the graph 42, the vertical axis represents the current value, and the horizontal axis represents the time. Like the current signal 41 (see FIG. 5), the current signal 43 is also a pulse signal with a peak portion 43a and a valley portion 43b. Note that the graph 42 shown in FIG. 6 is a graph of the current signal 43 in the case where the gain of the first light receiver 11 is increased.

As shown in the graph 42, the gain of the first light receiver 11 has been adjusted, and therefore the average value 43c of the current signal 43 becomes larger than the average value 41c of the current signal 41 (see FIG. 5). Further, the gain of the first light receiver 11 is adjusted, and therefore, the amount of light received by the first light receiver 11 increases. Therefore, the current value 37a corresponding to the intensity 35 of the ambient light 91 also becomes larger than the current value 37 corresponding to the intensity 35 of the ambient light 91 before the gain of the first light receiver 11 is adjusted.

In this embodiment, the first gain calculation unit 14a (see FIG. 4) adjusts the gain of the first light receiver 11 so as not to exceed the rated current 38a, based on the target value correlation information 34 (see FIG. 2). As a result, the amplitude 61 of the current signal 43 of the current output from the first light receiver 11 becomes larger than the amplitude 60 (see FIG. 5) of the current signal 41 (see FIG. 5) of the current output from the first light receiver 11 before the gain adjustment. In this case, the current value due to the noise components contained in the communication light 90 also increases. However, it is possible to improve the ratio of the amplitude 61 of the current signal 43 to the noise component than the ratio of the amplitude 60 of the current signal 41 to the noise component. In other words, by adjusting the gain of the first light receiver 11, the S/N ratio of the signal component of the communication light 90 received by the first light receiver 11 can be enhanced. Note that the amplitude 61 of the current signal 43 is the difference between the peak portion 43a and the valley portion 43b of the current signal 43.

### (Current Value Before Gain Adjustment in the Case of Reducing Light Receiving Area of Light Receiving Element)

Here, in the case of installing the first light receiver 11 in the first underwater optical wireless communication device 1, the light receiving area of the first light receiver 11 is limited by the space and other factors. Therefore, in the configuration in which the first light receiver 11 includes a plurality of light receiving elements 12, the case in which the light receiving area of the plurality of light receiving elements 12 is reduced will be described. For example, in the case where the first light receiver 11 is composed of four light receiving elements 12, the light receiving area of each of the light receiving elements 12 is reduced to one-fourth of that of the case in which the first light receiver 11 is composed of one light receiving element 12. Since the intensity of the light received by the light receiving element 12 is proportional to the light receiving area of the light receiving element 12, when the light receiving area of the light receiving element 12 is reduced, the intensity of the light received at the light receiving element 12 is also reduced.

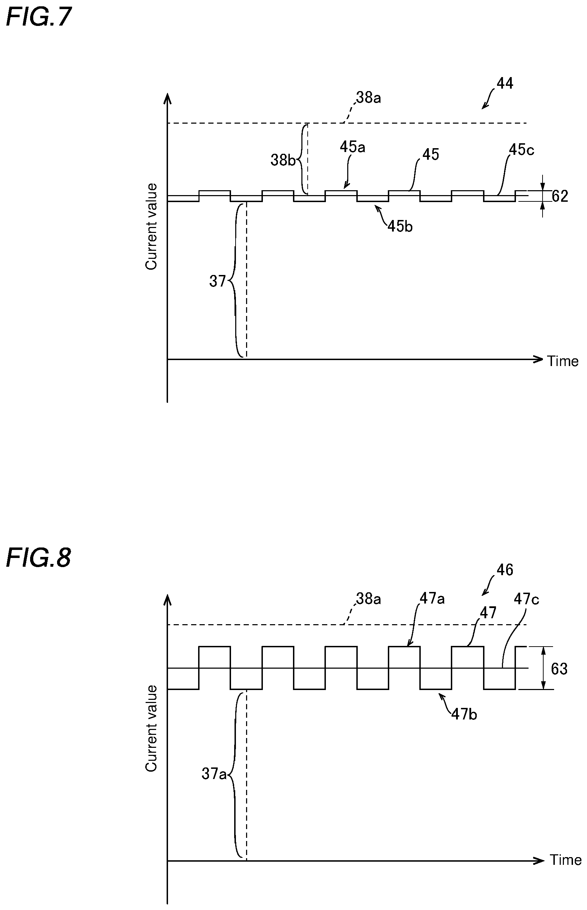

In this case, as shown in the graph 44 in FIG. 7, the amplitude 62 of the current signal 45 of the current output from the light receiving element 12 (see FIG. 4) with a reduced light receiving area becomes smaller than the amplitude of the signal when the area of the light receiving element 12 is not reduced. For example, if the light receiving area of light receiving element 12 is reduced to 1/4, the amplitude 62 of the current signal 45 becomes 1/4 of the amplitude of the signal when the area of the light receiving element 12 is not reduced. In this case, the difference 38b between the average value 45c of the current signal 45 and the value of the rated current 38a becomes larger, which increases the adjustment range when adjusting the gain of the first light receiver 11. Note that in the graph 44, the vertical axis represents the current value, and the horizontal axis represents the time. Further, the current signal 45 is a so-called pulse signal with a peak portion 45a and a valley portion 45b.

### (Current Value After Gain Adjustment in the Case of Reducing Light Receiving Area of Light Receiving Element)

The graph 46 shown in FIG. 8 shows the current signal 47 of the current output from the light receiving element 12 (see FIG. 4) after the light receiving area of the light receiving element 12 (see FIG. 4) is set to 1/4, and the gain of the light receiving element 12 is adjusted. In the graph 46, the vertical axis represents the current value, and the horizontal axis represents the time. Further, the current signal 47 is a so-called pulse signal with a peak portion 47a and a valley portion 47b.

Since the gain of the light receiving element 12 has been adjusted, the average value 47c of the current signal 47 is greater than the average value 45c of the current signal 45 before the adjustment of the gain of the light receiving element 12. Further, the amplitude 63, which is the magnitude of the difference between the peak portion 47a and the valley portion 47b of the current signal 47, is also larger than the amplitude 62 (see FIG. 7), which is the magnitude of the difference between the peak portion 45a (see FIG. 7) and the valley portion 45b (see FIG. 7) of the current signal 45 (see FIG. 7) before the adjustment of the gain of the light receiving element 12.

### (Addition of Signal Values After Gain Adjustment)

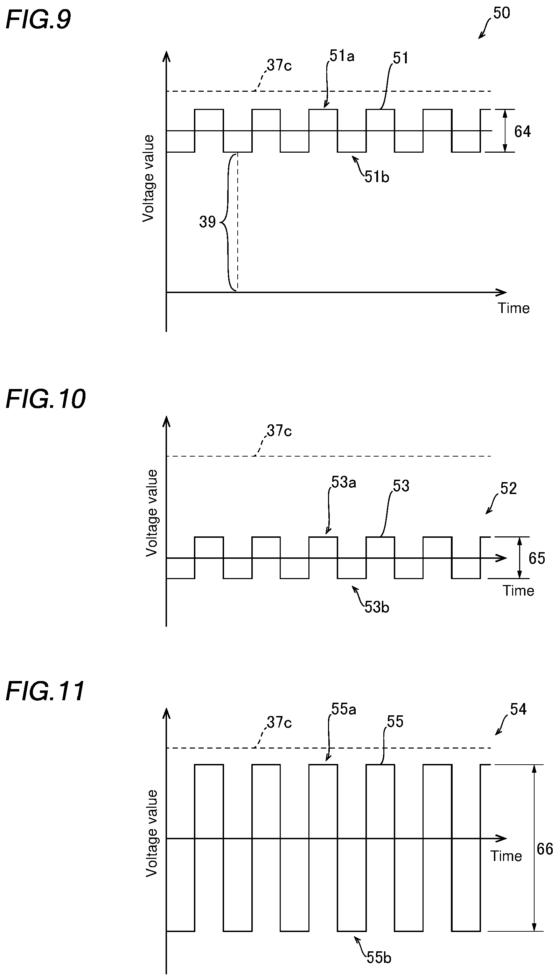

Further, in this embodiment, the signal acquisition unit 17 (see FIG. 4) acquires the total value 33 (see FIG. 4) of the voltages, which are based on the current value 30 (see FIG. 4) output from each of the plurality of light receiving elements 12 (see FIG. 4), as the voltage of the signal including the communication light 90 (see FIG. 1). The graph 50 shown in FIG. 9 shows the voltage signal 51 output from one light receiving element 12 and converted by the current-to-voltage conversion unit 17a (see FIG. 4). In the graph 50, the vertical axis represents the voltage value, and the horizontal axis represents the time. Further, the voltage signal 51 is a so-called pulse signal with a peak portion 51a and a valley portion 51b.

As shown in the graph 50, the voltage signal 51 based on the light received by the first light receiver 11 is offset by the amount of the voltage value 39, which corresponds to the intensity 35 of the ambient light 91. Since the voltage signal 51 is offset by the amount of the voltage value 39 corresponding to the intensity 35 of the ambient light 91, it may exceed the rated voltage 37c in the case where the gain adjustment of the first light receiver 11 is made without considering the voltage value 39 corresponding to the intensity 35 of the ambient light 91. In the case where the total value 33 of the voltages based on the current output from the first light receiver 11 exceeds the rated voltage 37c, the voltage signal based on the communication light 90 will be saturated, and the communication based on the communication light 90 will not become available.

Therefore, in this embodiment, the controller 14 (see FIG. 2) controls the signal acquisition unit 17 (see FIG. 4) to remove the voltage value 39 based on the ambient light 91 by the DC component removal unit 17b. With this, the voltage signal 53 shown in FIG. 10, which is shown in the graph 52, can be obtained. In the graph 52, the vertical axis represents the voltage value, and the horizontal axis represents the time. Further, the voltage signal 53 is a so-called pulse signal with a peak portion 53a and a valley portion 5 3 b . Since the voltage signal 53 shown in the graph 52 is the signal obtained by removing the voltage value 39 corresponding to the intensity 35 of the ambient light 91 from the voltage signal 51 (see FIG. 9) shown in the graph 50 (see FIG. 9), the amplitude 65 of the voltage signal 53 has the same amplitude as the amplitude 64 (see FIG. 9) of the voltage signal 51.

In this embodiment, the first light receiver 11 (see FIG. 2) is composed of a plurality of light receiving elements 12 (see FIG. 4), and the signal acquisition unit 17 acquires the signals of the communication light 90 based on the current output from each of the plurality of light receiving elements 12. Specifically, the signal acquisition unit 17 converts the current output from each of the plurality of light receiving elements 12 into a voltage by the plurality of current-to-voltage conversion units 17a. Then, after removing the voltage value 39 corresponding to the intensity 35 of the ambient light 91 from each voltage corresponding to the current output from the plurality of light receiving elements 12 by the DC component removal unit 17b, they are added by the voltage adding unit 17c. Note that, in this embodiment, the controller 14 adjusts the gain of the first light receiver 11 so that the voltage value (total value 33 of the voltages (see FIG. 4)) after the addition does not exceed the rated voltage 37c.

The graph 54 shown in FIG. 11 shows the voltage signal 55 resulting from adding the plurality of voltages corresponding to the current values 30 (see FIG. 4) output from the plurality of light receiving elements 12 (see FIG. 4). In other words, the voltage signal 55 represents the total value 33 of the voltages. In the graph 54, the vertical axis represents the voltage value, and the horizontal axis represents the time. Further, the voltage signal 55 is a so-called pulse signal with a peak portion 55a and a valley portion 5 5 b . As shown in the graph 54, the amplitude 66 of the voltage signal 55, resulting from adding up the plurality of voltages, is larger than the amplitude 65 of the voltage signal 53 (see FIG. 10) before adding up the voltages. In this embodiment, as it includes four light-receiving elements 12, the amplitude 66 of the voltage signal 55 is four times larger than the amplitude 65 of the voltage signal 53.

### (Signal Acquisition Processing of Communication light)

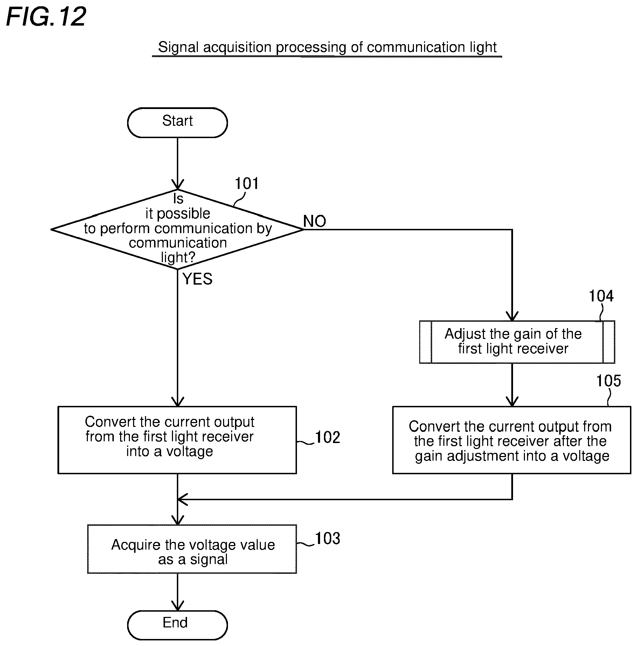

Next, referring to FIG. 12, the configuration in which the controller 14 (see FIG. 2) acquires the signal of the communication light 90 (see FIG. 1) will be described. Note that the processing shown in FIG. 12 is continuously performed at predetermined intervals during which the first underwater optical wireless communication device 1 (see FIG. 2) communicates by receiving the communication light 90 from the second underwater optical wireless communication device 2 (see FIG. 1), and concludes upon termination of the communication.

In Step 101, the controller 14 determines whether the communication via the communication light 90 can be performed. Specifically, the controller 14 determines whether the communication via the communication light 90 can be performed, based on whether the intensity of the communication light 90 is greater than a predetermined intensity. If the communication via the communication light 90 can be performed, the processing proceeds to Step 102. If the communication via the communication light 90 is not possible, the processing proceeds to Step 104.

In Step 102, the controller 14 converts the current output from the first light receiver 11 (see FIG. 4) into a voltage by the current-to-voltage conversion unit 17a (see FIG. 4). In this embodiment, the controller 14 converts the current output from each of the plurality of light receiving elements 12 (see FIG. 4) into a voltage by the plurality of current-to-voltage conversion units 17a.

In Step 103, the controller 14 controls the signal acquisition unit 17 (see FIG. 4) to acquire the total value 33 of the voltages converted in Step 102 as the voltage value of the signal of the communication light 90. Thereafter, the processing is terminated.

If the processing advances from Step 101 to Step 104, in Step 104, the controller 14 (first gain calculation unit 14a (see FIG. 4)) adjusts the gain of the first light receiver 11 by controlling the gain adjustment unit 16 (see FIG. 4). The details of the processing in which the first gain calculation unit 14a adjusts the gain of the first light receiver 11 will be described below.

In Step 105, the controller 14 converts the current output from the first light receiver 11 after the gain adjustment to a voltage by the current-to-voltage conversion unit 17a. In this embodiment, the controller 14 converts the current output from each of the plurality of light receiving elements 12 after the gain adjustment into a voltage by the plurality of current-to-voltage conversion units 17a. Thereafter, the processing proceeds to Step 103.

Note that the processing proceeds from Step 105 to Step 103, in Step 103, the controller 14 acquires the total value 33 of the voltages, which is converted in Step 105, as the voltage value of the signal of the communication light 90 by controlling the signal acquisition unit 17.

### (Gain Adjustment Processing of First Light Receiver)

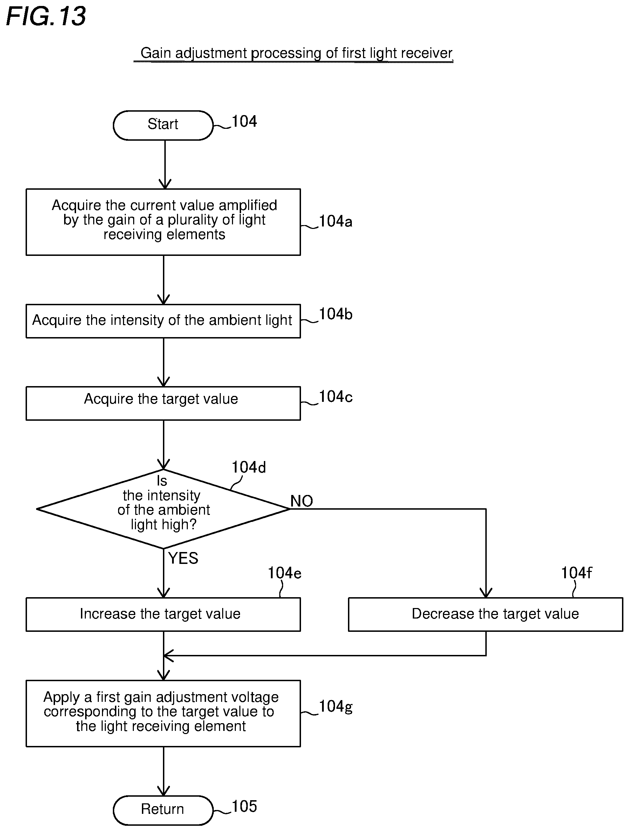

Next, referring to FIG. 13, the processing in which the first gain calculation unit 14a (see FIG. 4) adjusts the gains of the plurality of light receiving elements 12 (see FIG. 4) will be described.

In Step 104a, the first gain calculation unit 14a acquires the current value 30 (see FIG. 4) amplified by the gains of the plurality of light receiving elements 12. In this embodiment, the first gain calculation unit 14a acquires the current value 30, which is amplified by the gains of the plurality of light receiving elements 12 and is converted from an analog value to a digital value by the AD conversion unit 16a (see FIG. 4), from each of the plurality of light receiving elements 12.

In Step 104b, the first gain calculation unit 14a acquires the intensity 35 (see FIG. 2) of the ambient light 91 (see FIG. 1). In this embodiment, the first gain calculation unit 14a converts the analog value of the voltage, which is output from the second light receiver 13 (see FIG. 4) and converted from a current to a voltage by the current-to-voltage conversion unit 16b (see FIG. 4), into a digital value by the AD conversion unit 16c, to acquire the intensity 35 of the ambient light 91.

In Step 104c, the first gain calculation unit 14a acquires the target value 31 (see FIG. 2). Specifically, the first gain calculation unit 14a acquires the target value 31 that has already been set. Note that if the target value 31 is not set, the first gain calculation unit 14a will set a predetermined value as the target value 31.

In Step 104d, the first gain calculation unit 14a determines whether the intensity 35 of the ambient light 91 is high. Specifically, the first gain calculation unit 14a compares the target value 31 acquired in Step 104c with the current value 30 acquired in Step 104a. If the value of the current value 30 is smaller than the target value 31, the first gain calculation unit 14a concludes that the intensity 35 of the ambient light 91 is high. Further, if the current value 30 is greater than the target value 31, the first gain calculation unit 14a concludes that the intensity 35 of the ambient light 91 is low. If the intensity of the ambient light 91 is high, the processing proceeds to Step 104e. If the intensity 35 of the ambient light 91 is low, the processing proceeds to Step 104f.

In Step 104e, the first gain calculation unit 14a increases the target value 31. Specifically, the first gain calculation unit 14a acquires the target value 31 based on the value of the current value 30 acquired in Step 104a, the intensity 35 of the ambient light 91 acquired in Step 104b, and the target value correlation information 34 (see FIG. 2) stored in the storage unit 15 (see FIG. 2).

Note that if the intensity 35 of the ambient light 91 is high, by acquiring the target value 31 based on the target value correlation information 34, the target value 31 that can be communicated by the communication light 90 is acquired. In other words, through the processing of Step 104e, the target value 31 can be increased. Thereafter, the processing proceeds to Step 104g.

Further, if the processing proceeds from Step 104d to Step 104f, the first gain calculation unit 14a reduces the target value 31. Specifically, the first gain calculation unit 14a acquires the target value 31 based on the value of the current value 30 acquired in Step 104a, the intensity 35 of the ambient light 91 acquired in Step 104b, and the target value correlation information 34 stored in the storage unit 15.

Note that by acquiring the target value 31 based on the target value correlation information 34 when the intensity 35 of the ambient light 91 is low, as a result, it is possible to reduce the target value 31 below the target value 31 acquired in Step 104c. Thereafter, the processing proceeds to Step 104g.

In Step 104g, the first gain calculation unit 14a applies the first gain control voltage 32 (see FIG. 4) to each of the plurality of light receiving elements 12 based on the target value 31 acquired (changed) in Step 104e or Step 104f. In this embodiment, the first gain calculation unit 14a adjusts the gain individually for each of the plurality of light receiving elements 12 by applying an individually set first gain control voltage 32 to each of the plurality of light receiving elements 12. Thereafter, the processing proceeds to Step 105.

Note that the processing of Step 104a or the processing of Step 104b may be performed first. Further, in this embodiment, the processing of Steps 104d to 104g is carried out individually for each of the plurality of light receiving elements 12.

Further, the second underwater optical wireless communication device 2 (see FIG. 3) may also receive ambient light 91 (see FIG. 1) together with the communication light 90 (see FIG. 2) when receiving the communication light 90 (see FIG. 1) emitted by the underwater optical wireless communication device 1 (see FIG. 2). Therefore, the controller 24 (see FIG. 3) of the second underwater optical wireless communication device 2 is also configured to adjust the gain of the first light receiver 21 (see FIG. 3) in the same way as the controller 14 (see FIG. 2) of the first underwater optical wireless communication device 1. With this, bidirectional communication using the communication light 90 can be performed in both the first underwater optical wireless communication device 1 and the second underwater optical wireless communication device 2.

### (Effects of This Embodiment)

In this embodiment, the following effects can be obtained.

In this embodiment, as described above, the first underwater optical wireless communication device 1 is provided with a first light receiver 11 that receives communication light 90 emitted from another optical wireless communication device (second underwater optical wireless communication device 2), a second light receiver 13 that receives ambient light 91, which is light other than the communication light 90, and a controller 14 that performs control to adjust the gain of the first light receiver 11 based on the intensity of the communication light 90 received by the first light receiver 11 and the intensity 35 of the ambient light 91 received by the second light receiver 13.

With this, the gain of the first light receiver 11 is adjusted based on the intensity of the communication light 90 received by the first light receiver 11 and the intensity 35 of the ambient light 91 received by the second light receiver 13, so that the amplitude of the communication light 90 can be increased when the ambient light 91 is strong. Therefore, it becomes possible to increase the ratio of the amplitude of the communication light 90 relative to the noise caused by the ambient light 91 contained in the communication light 90, thereby improving the S/N ratio of the communication light 90. As a result, even in the case where the ambient light 91 is received together with the communication light 90, it is possible to suppress the communication by the communication light 90 from being interfered with by the ambient light 91.

Further, in the above-described embodiment, the following further effects can be obtained by configuring as follows.

In other words, in this embodiment, as described above, it is further provided with an AD conversion unit 16a (current value acquisition unit) that acquires a current value 30 amplified by the gain based on the intensity of the communication light 90 received by the first light receiver 11, and the controller 14 is configured to perform control to adjust the gain of the first light receiver 11 so that the current value 30 based on the intensity of the communication light 90 acquired by the AD conversion unit 16a approaches the preset target value 31, based on the intensity 35 of the ambient light 91 received by the second light receiver 13. With this, the gain of the first light receiver 11 is adjusted to approach the preset target value 31 based on the intensity 35 of the ambient light 91, and therefore, the gain of the first light receiver 11 can be adjusted without having to calculate the target value 31. As a result, the processing burden of the controller 14 (first gain calculation unit 14a) when adjusting the gain of the first light receiver 11 can be reduced.

Further, in this embodiment, as described above, the controller 14 is configured to adjust the first gain control voltage 32 (gain control voltage) applied to the first light receiver 11 so that the current value 30, which is based on the intensity of the communication light 90 received by the first light receiver 11, approaches the set target value 31, thereby controlling the adjustment of the gain of the first light receiver 11. With this, by adjusting the gain of the first light receiver 11 with the first gain control voltage 32, it becomes possible to easily bring the current value 30, which is based on the intensity of the communication light 90 received by the first light receiver 11, closer to the set target value 31. As a result, the gain of the first light receiver 11 can be easily adjusted.

Further, in this embodiment, as described above, the controller 14 is configured to perform control to increase the target value 31 when the intensity 35 of the ambient light 91 is high, and to decrease the target value 31 when the intensity 35 of the ambient light 91 is low. Here, when the intensity of the ambient light 91 is high, the intensity of the communication light 90 becomes relatively small among the intensity of the light received by the first light receiver 11. In other words, when the intensity 35 of the ambient light 91 is high, communication by the communication light 90 becomes difficult. On the other hand, when the intensity 35 of the ambient light 91 is low, the intensity 35 of the communication light 90 becomes relatively higher among the intensity of the light received by the first light receiver 11.

In other words, if the target value 31 is set without considering the intensity of the ambient light 91, there may be cases where the gain of the first light receiver 11 is increased excessively. Therefore, by configuring as described above, it is possible to set the target value 31 such that the increase rate of the current value 30 by the gain of the first light receiver 11 is set to an appropriate value in accordance with the intensity 35 of the ambient light 91. As a result, even when the intensity 35 of the ambient light 91 changes, it is possible to easily perform the gain adjustment of the first light receiver 11 so that the increase rate of the current value 30 due to the gain of the first light receiver 11 becomes the appropriate increase rate.

Further, in this embodiment, as described above, the controller 14 is configured to perform control to set the target value 31 so that the current value 30 output from the first light receiver 11 becomes less than or equal to the rated current 38a of the first light receiver 11, when the intensity 35 of the ambient light 91 is high, and the control to increase the target value 31 is performed.

With this, it becomes possible to prevent the current value 30 output from the first light receiver 11 from exceeding the rated current 38a when increasing the gain of the first light receiver 11. As a result, it is possible to prevent saturation of the current value output from the first light receiver 11 caused by excessively increasing its gain, thus preventing the communication by the communication light 90 from being interfered with due to the saturation of the current value output from the first light receiver 11.

Further, in this embodiment, as described above, the first light receiver 11 includes a plurality of light receiving elements 12, and the controller 14 is configured to perform control to independently adjust the gain of each of the plurality of light receiving elements 12 based on the current value 30, which is derived from the intensity of the communication light 90 received by each of the plurality of light receiving elements 12, the target value 31, and the intensity 35 of the ambient light 91.

Here, for example, when the number of the light receiving elements 12 is increased while reducing the light receiving area of the light receiving element 12, the intensity of the light received by each of the light receiving elements 12 can be lowered. Further, since the value of the rated current 38a of the light receiving element 12 does not change, it is possible to increase the difference between the current value 30 based on the intensity of the light received at each of the plurality of light receiving elements 12 and the rated current 38a. As a result, it is possible to widen the adjustment range when adjusting the gain of the light receiving element 12. In this case, by arranging each of the plurality of light receiving elements 12 in different directions relative to each other, it is possible to receive the communication light 90 from a plurality of directions.

In this case, since the gain of each of the plurality of light receiving elements 12 is adjusted independently, it is possible to appropriately adjust the gain of the corresponding light receiving element 12 individually, even when the light received by the light receiving element 12, corresponding to the direction of incident communication light 90, includes both the communication light 90 and ambient light 91. As a result, even when communicating with the communication light 90 received from a plurality of directions, it is possible to minimize interference in communication caused by the ambient light 91.

Further, in this embodiment, as described above, it further includes a plurality of current-to-voltage conversion units 17a that converts the current output from the plurality of light receiving elements 12 into voltage. The controller 14 is configured to control the acquisition of the total value 33 of the voltages, which are output from the plurality of light receiving elements 12 after the gain has been adjusted and are converted by the plurality of current-to-voltage conversion units 17a, as the signal of communication light 90.

With this, for example, even if the amplitude of the signal based on the voltage converted from the current output from one light receiving element 12 is small, the amplitude of the signal based on the total value 33 of the voltage can be increased because the voltages converted from the currents output from the plurality of light receiving elements 12 are summed. Thus, even if it is difficult to increase the amplitude of the signal based on the voltage acquired after adjusting the gain of each light receiving element 12, the amplitude of the signal derived from the communication light 90 can be increased by a signal based on the total value 33 of the voltages acquired by summing a plurality of voltages. As a result, since it becomes possible to increase the amplitude of the signal based on communication light 90, the strength of communication via the communication light 90 can be enhanced.

In addition, in this embodiment, as described above, the storage unit 15 is further provided that stores target value correlation information 34, which shows the correlation between the target value 31 for the current value 30, derived from the intensity of communication light 90 received by the first light receiver 11, and the intensity 35 of ambient light 91. The controller 14 is configured to control the adjustment of the target value 31 based on the intensity 35 of ambient light 91 received by the second light receiver 13 and the target value correlation information 34.

With this configuration, it is possible to easily acquire the target value 31 for adjusting the gain of the first light receiver 11 to the appropriate gain according to the intensity 35 of the ambient light 91 by using the target value correlation information 34 along with the intensity 35 of the ambient light 91. As a result, the gain of the first light receiver 11 can be easily adjusted to the appropriate gain according to the intensity 35 of the ambient light 91.

Further, in this embodiment, as described above, the housing 1a for housing the first light receiver 11, the second light receiver 13, and the controller 14 is further provided, and each of the first light receiver 11 and the second light receiver 13 is located within the housing 1a at positions where the incident direction of the ambient light 91 is the same.

With this, it is possible to suppress the difference between the intensity 35 of the ambient light 91 received by the first light receiver 11 and the intensity 35 of the ambient light 91 received by the second light receiver 13 from becoming larger. As a result, it is possible to suppress the reduction of the accuracy of adjusting the gain of the first light receiver 11 based on the intensity 35 of the ambient light 91.

Further, in this embodiment, as described above, the first light receiver 11 includes a photomultiplier tube, and the second light receiver 13 includes a photodiode capable of receiving light of higher intensity than that of the photomultiplier tube.

Here, a photodiode has a larger upper limit of the amount of light it can receive compared with a photomultiplier tube. Further, in water, the ambient light 91 is generally more intense than the communication light 90. Therefore, as described above, by configuring the second light receiver 13 that includes a photodiode, which has a higher upper limit of light reception than a photomultiplier tube, to receive the ambient light 91 that is more intense than communication light 90, it is possible to increase the upper limit of the intensity 35 of the ambient light 91 that can be received by the second light receiver 13, compared with the configuration that includes a photomultiplier tube. As a result, even in an environment where the intensity 35 of the ambient light 91 is higher, and the communication by the communication light 90 is more difficult to perform, it is possible to adjust the gain of the first light receiver 11 with high accuracy according to the intensity 35 of the ambient light 91. Therefore, even in an environment where the influence of the ambient light 91 is stronger, it is possible to provide the first underwater optical wireless communication device 1 (underwater optical wireless communication device) that enables communication by the communication light 90.

### <Modifications>

Note that the embodiments disclosed here should be considered illustrative and not restrictive in all respects. It should be noted that the scope of the invention is indicated by claims and is intended to include all modifications (modified examples) within the meaning and scope of the claims.

For example, in the above-described embodiment, a configuration example is shown in which the controller 14 (first gain calculation unit 14a) adjusts the gain of the first light receiver 11 so that the current value 30 output from the first light receiver 11 approaches the target value 31, but the present invention is not limited thereto. For example, the controller 14 may be configured to directly change the gain of the first light receiver 11.

Further, in the above-described embodiment, a configuration example is shown in which the first gain calculation unit 14a adjusts the gain of the first light receiver 11 based on the current value 30 output from the first light receiver 11, but the present invention is not limited thereto. For example, the first gain calculation unit 14a may be configured to adjust the gain of the first light receiver 11 based on the voltage value converted by the current-to-voltage conversion unit 17a from the current output from the first light receiver 11. In this case, the target value correlation information can be information that indicates the correlation between the target value of the voltage value output from the first light receiver 11 and the light intensity 35 of the ambient light 91.

Further, in the embodiment described above, a configuration example is shown in which each of the plurality of light receiving elements 12 has one-fourth of the light receiving area as compared with the case in which the first light receiver 11 includes one light receiving element 12, but the present invention is not limited thereto. For example, each of the plurality of light receiving elements 12 could be configured to have the same light-receiving area as when the first light receiver 11 includes a single light receiving element 12, with the entire light-receiving section having a total light-receiving area that is four times larger.

In this configuration, as compared with the configuration in which the light-receiving area of each light-receiving element 12 is reduced to one-fourth, the difference between the average value of the current signal and the value of the rated current 38a is reduced, leading to a narrower adjustment range for the gain of the first light receiver 11. However, unlike the case where the first light receiver 11 is composed of one light receiving element 12, the signals of the communication light 90 received by each light receiving element 12 can be added together, this allows for an increase in the amplitude of the signal (voltage signal) acquired by the signal acquisition unit 17.

Further, in the above-described embodiment, a configuration example is shown in which the first light receiver 11 is composed of four light-receiving elements 12, but the present invention is not limited thereto. The number of the light receiving elements 12 included by the first light receiver 11 may be other than four. For example, the first light receiver 11 may be configured to include one light receiving element 12. Further, the first light receiver 11 may be composed of a plurality of light receiving elements 12, which may be less than four, or more than four.

Further, in the above-described embodiment, a configuration example is shown in which each of the plurality of light receiving elements 12 is arranged in an equal orientation with respect to each other is shown, but the present invention is not limited thereto. For example, each of the plurality of light receiving elements 12 may be configured to be oriented differently from one another. By configuring as described above, it is possible to perform communication by the communication light 90 incident from a plurality of directions by each of the plurality of light receiving elements 12.

Further, in the above-described embodiment, a configuration example is shown in which the first underwater optical wireless communication device 1 is provided with one first light receiving light receiver 11, but the present invention is not limited thereto. For example, the first underwater optical wireless communication device 1 may be provided with a plurality of first light receivers 11. In this case, by arranging the plurality of first light receivers 11 in different directions, the communication light 90 incident from a plurality of directions can be used for the communication light 90.

Further, in the above-described embodiment, a configuration example is shown in which the second light receiver 13 is provided with a photodiode, but the present invention is not limited thereto. The second light receiver 13 may include any light receiving element as long as the second light receiver 13 is capable of receiving light of higher intensity than the first light receiver 11.

Further, in the above-described embodiment, a configuration example is shown in which the first underwater optical wireless communication device 1 is installed in an AUV, which is a moving body 80. For example, the first underwater optical wireless communication device 1 may be installed on a manned submarine (HOV: Human Occupied Vehicle). Further, the first underwater optical wireless communication device 1 may be installed in a remotely operated vehicle (ROV) that is controlled by a person via a cable.

Further, in the above-described embodiment, a configuration example is shown in which the second underwater optical wireless communication device 2 is installed on a fixed body 81, and the first underwater optical wireless communication device 1 is installed on a moving body 80, but the present invention is not limited thereto. For example, the first underwater optical wireless communication device 1 may be installed on the moving body 80, and the second underwater optical wireless communication device 2 may be installed on the fixed body 81. Further, each of the first underwater optical wireless communication device 1 and the second underwater optical wireless communication device 2 may be provided on different moving bodies 80 from each other.

## Claims

1. An underwater optical wireless communication device (1) comprising:
a first light receiver (11) configured to receive communication light (90) emitted from another wireless communication device (2);
a second light receiver (13) configured to receive ambient light (91), which is light other than the communication light (90); and **characterized in that** the underwater optical wireless communication device comprises:
a controller (14) configured to perform control to adjust a gain of the first light receiver (11), based on intensity of the communication light (90) received by the first light receiver (11) and intensity of the ambient light (91) received by the second light receiver (13).

2. The underwater optical wireless communication device (1) as recited in claim 1, further comprising:
a current value acquisition unit (16a) configured to acquire a current value (30) amplified by the gain based on the intensity of the communication light (90) received by the first light receiver (11),
wherein the controller (14) is configured to perform control to adjust the gain of the first light receiver (11) so that the current value (30), which is based on the intensity of the communication light (90), acquired by the current value acquisition unit (16a), approaches a preset target value (31), based on the intensity of the ambient light (91) received by the second light receiver (13).

3. The underwater optical wireless communication device (1) as recited in claim 2, wherein the controller (14) is configured to perform control to adjust the gain of the first light receiver (11) by adjusting a gain control voltage (32) applied to the first light receiver (11) so that the current value (30), which is based on the intensity of the communication light (90) received by the first light receiver (11), approaches the set target value (31).

4. The underwater optical wireless communication device (1) as recited in claim 3,
wherein the controller (14) is configured to perform control to increase the target value (31) when the intensity of the ambient light (91) is high and to decrease the target value (31) when the intensity of the ambient light (91) is low.

5. The underwater optical wireless communication device (1) as recited in claim 2,
wherein the controller (14) is configured to perform control to set the target value (31) so that the current value (30) output from the first light receiver (11) becomes less than or equal to a rated current (38a) of the first light receiver (11) when the intensity of the ambient light (91) is high, and the control to increase the target value (31) is performed.

6. The underwater optical wireless communication device (1) as recited in claim 2,
wherein the first light receiver (11) includes a plurality of light receiving elements (12), and
wherein the controller (14) is configured to perform control to independently adjust the gain of each of the plurality of light receiving elements (12), based on the current value (30), which is based on the intensity of the communication light (90) received by each of the plurality of light receiving elements (12), the target value (31), and the intensity of the ambient light (91).

7. The underwater optical wireless communication device (1) as recited in claim 6, further comprising:
a plurality of current-to-voltage conversion units (17a) each configured to change a current output from each of a plurality of light receiving elements (12) into a voltage,
wherein the controller (14) is configured to perform control to acquire a total value (33) of the voltages output from the plurality of light receiving elements (12) after a gain adjustment and converted by the plurality of current-to-voltage conversion units (17a), as a signal of the communication light (90).

8. The underwater optical wireless communication device (1) as recited in claim 2, further comprising:
a storage unit (15) configured to store target value correlation information (34) indicating a correlation between the target value (31) of the current value (30), which is based on the intensity of the communication light (90) received by the first light receiver (11), and the intensity of the ambient light (91),
wherein the controller (14) is configured to perform control to adjust the target value (31), based on the intensity of the ambient light (91) received by the second light receiver (13) and the target value correlation information (34).

9. The underwater optical wireless communication device (1) as recited in claim 1, further comprising:
a housing (1a) configured to house the first light receiver (11), the second light receiver (13), and the controller (14),
wherein each of the first light receiver (11) and the second light receiver (13) is positioned within the housing (1a) such that an incident direction of the ambient light (91) is the same.

10. The underwater optical wireless communication device (1) as recited in claim 1,
wherein the first light receiver (11) includes a photomultiplier tube, and
wherein the second light receiver (13) includes a photodiode capable of receiving light with a higher intensity than that of the photomultiplier tube.

## Patentansprüche

1. Optische drahtlose Unterwasserkommunikationsvorrichtung (1), umfassend:
einen ersten Lichtempfänger (11), der konfiguriert ist, um Kommunikationslicht (90) zu empfangen, das von einer anderen drahtlosen Kommunikationsvorrichtung (2) ausgesendet wird;
einen zweiten Lichtempfänger (13), der konfiguriert ist, um Umgebungslicht (91) zu empfangen, das anderes Licht als das Kommunikationslicht (90) ist; und **dadurch gekennzeichnet, dass** die optische drahtlose Unterwasserkommunikationsvorrichtung umfasst:
eine Steuereinrichtung (14), die konfiguriert ist, um eine Steuerung durchzuführen, um eine Verstärkung des ersten Lichtempfängers (11) anzupassen, basierend auf einer Intensität des Kommunikationslichts (90), das durch den ersten Lichtempfänger (11) empfangen wird, und der Intensität des Umgebungslichts (91), das durch den zweiten Lichtempfänger (13) empfangen wird.

2. Optische drahtlose Unterwasserkommunikationsvorrichtung (1) nach Anspruch 1, ferner umfassend:
eine Stromwerterfassungseinheit (16a), die konfiguriert ist, um einen Stromwert (30) zu erfassen, der um die Verstärkung amplifiziert ist, basierend auf der Intensität des Kommunikationslichts (90), das durch den ersten Lichtempfänger (11) empfangen wird,
wobei die Steuereinrichtung (14) konfiguriert ist, um die Steuerung durchzuführen, um die Verstärkung des ersten Lichtempfängers (11) so anzupassen, dass der Stromwert (30), der auf der Intensität des Kommunikationslichts (90) basiert, das durch die Stromerfassungseinheit (16a) erfasst wird, sich einem voreingestellten Zielwert (31) annähert, basierend auf der Intensität des Umgebungslichts (91), das durch den zweiten Lichtempfänger (13) empfangen wird.

3. Optische drahtlose Unterwasserkommunikationsvorrichtung (1) nach Anspruch 2,
wobei die Steuereinrichtung (14) konfiguriert ist, um die Steuerung durchzuführen, um die Verstärkung des ersten Lichtempfängers (11) durch Anpassen einer Verstärkungssteuerspannung (32) durchzuführen, die an den ersten Lichtempfänger (11) angelegt wird, sodass sich der Stromwert (30), der auf der Intensität des Kommunikationslichts (90) basiert, das durch den ersten Lichtempfänger (11) empfangen wird, dem eingestellten Zielwert (31) annähert.

4. Optische drahtlose Unterwasserkommunikationsvorrichtung (1) nach Anspruch 3,
wobei die Steuereinrichtung (14) konfiguriert ist, um die Steuerung durchzuführen, um den Zielwert (31) zu erhöhen, wenn die Intensität des Umgebungslichts (91) hoch ist, und um den Zielwert (31) zu verringern, wenn die Intensität des Umgebungslichts (91) niedrig ist.

5. Optische drahtlose Unterwasserkommunikationsvorrichtung (1) nach Anspruch 2,
wobei die Steuereinrichtung (14) konfiguriert ist, um die Steuerung durchzuführen, um den Zielwert (31) so einzustellen, dass der Stromwert (30), der durch den ersten Lichtempfänger (11) ausgegeben wird, kleiner als oder gleich einem Nennstrom (38a) des ersten Lichtempfängers (11) wird, wenn die Intensität des Umgebungslichts (91) hoch ist, und die Steuerung durchgeführt wird, um den Zielwert (31) zu erhöhen.

6. Optische drahtlose Unterwasserkommunikationsvorrichtung (1) nach Anspruch 2,
wobei der erste Lichtempfänger (11) eine Vielzahl von Lichtempfangselementen (12) einschließt, und
wobei die Steuereinrichtung (14) konfiguriert ist, um die Steuerung durchzuführen, um die Verstärkung jedes der Vielzahl von
Lichtempfangselementen (12) unabhängig anzupassen, basierend auf dem Stromwert (30), der auf der Intensität des Kommunikationslichts (90), das durch jedes der Vielzahl von Lichtempfangselementen (12) empfangen wird, dem Zielwert (31) und der Intensität des Umgebungslichts (91) basiert.

7. Optische drahtlose Unterwasserkommunikationsvorrichtung (1) nach Anspruch 6, ferner umfassend:
eine Vielzahl von Strom-Spannungs-Umwandlungseinheiten (17a), die jeweils konfiguriert sind, um einen Strom, der von jedem einer Vielzahl von Lichtempfangselementen (12) ausgegeben wird, in eine Spannung umzuwandeln,
wobei die Steuereinrichtung (14) konfiguriert ist, um die Steuerung durchzuführen, um einen Gesamtwert (33) der Spannungen, die von der Vielzahl von Lichtempfangselementen (12) nach einer Verstärkungsanpassung ausgegeben werden und durch die Vielzahl von Strom-Spannungs-Umwandlungseinheiten (17a) umgewandelt werden, als ein Signal des Kommunikationslichts (90) zu erfassen.

8. Optische drahtlose Unterwasserkommunikationsvorrichtung (1) nach Anspruch 2, ferner umfassend:
eine Speichereinheit (15), die konfiguriert ist, um Zielwertkorrelationsinformationen (34) zu speichern, die eine Korrelation zwischen dem Zielwert (31) des Stromwerts (30), der auf der Intensität des Kommunikationslichts (90) basiert, das durch den ersten Lichtempfänger (11) empfangen wird, und der Intensität des Umgebungslichts (91) angeben,
wobei die Steuereinrichtung (14) konfiguriert ist, um die Steuerung durchzuführen, um den Zielwert (31) basierend auf der Intensität des Umgebungslichts (91), das durch den zweiten Lichtempfänger (13) empfangen wird, und den Zielwertkorrelationsinformationen (34) anzupassen.

9. Optische drahtlose Unterwasserkommunikationsvorrichtung (1) nach Anspruch 1, ferner umfassend:
ein Gehäuse (1a), das konfiguriert ist, um den ersten Lichtempfänger (11), den zweiten Lichtempfänger (13) und die Steuereinrichtung (14) aufzunehmen,
wobei jeweils der erste Lichtempfänger (11) und der zweite Lichtempfänger (13) derart innerhalb des Gehäuses (1a) positioniert sind, dass eine Einfallsrichtung des Umgebungslichts (91) dieselbe ist.

10. Optische drahtlose Unterwasserkommunikationsvorrichtung (1) nach Anspruch 1,
wobei der erste Lichtempfänger (11) eine Fotovervielfacherröhre einschließt, und
wobei der zweite Lichtempfänger (13) eine Fotodiode einschließt, die in der Lage ist, Licht mit einer höheren Intensität als die der Fotovervielfacherröhre zu empfangen.

## Revendications

1. Dispositif de communication optique sous-marine sans fil (1) comprenant :
un premier récepteur de lumière (11) configuré pour recevoir une lumière de communication (90) émise par un autre dispositif de communication sans fil (2) ;
un second récepteur de lumière (13) configuré pour recevoir une lumière ambiante (91), qui est une lumière autre que la lumière de communication (90) ; et **caractérisé en ce que** le dispositif de communication optique sous-marine sans fil comprend :
un dispositif de commande (14) configuré pour réaliser une commande afin d'ajuster un gain du premier récepteur de lumière (11), sur la base d'une intensité de la lumière de communication (90) reçue par le premier récepteur de lumière (11) et d'une intensité de la lumière ambiante (91) reçue par le second récepteur de lumière (13).

2. Dispositif de communication optique sous-marine sans fil (1) selon la revendication 1, comprenant en outre :
une unité d'acquisition de valeur de courant (16a) configurée pour acquérir une valeur de courant (30) amplifiée par le gain sur la base de l'intensité de la lumière de communication (90) reçue par le premier récepteur de lumière (11),
dans lequel le dispositif de commande (14) est configuré pour réaliser une commande afin d'ajuster le gain du premier récepteur de lumière (11) de sorte que la valeur de courant (30), qui est basée sur l'intensité de la lumière de communication (90), acquise par l'unité d'acquisition de valeur de courant (16a), s'approche d'une valeur cible (31) prédéfinie, sur la base de l'intensité de la lumière ambiante (91) reçue par le second récepteur de lumière (13).

3. Dispositif de communication optique sous-marine sans fil (1) selon la revendication 2,
dans lequel le dispositif de commande (14) est configuré pour réaliser une commande afin d'ajuster le gain du premier récepteur de lumière (11) en ajustant une tension de commande de gain (32) appliquée au premier récepteur de lumière (11) de sorte que la valeur de courant (30), qui est basée sur l'intensité de la lumière de communication (90) reçue par le premier récepteur de lumière (11), s'approche de la valeur cible (31) définie.

4. Dispositif de communication optique sous-marine sans fil (1) selon la revendication 3,
dans lequel le dispositif de commande (14) est configuré pour réaliser une commande afin d'augmenter la valeur cible (31) lorsque l'intensité de la lumière ambiante (91) est élevée et de diminuer la valeur cible (31) lorsque l'intensité de la lumière ambiante (91) est faible.

5. Dispositif de communication optique sous-marine sans fil (1) selon la revendication 2,
dans lequel le dispositif de commande (14) est configuré pour réaliser une commande afin de définir la valeur cible (31) de sorte que la valeur de courant (30) émise par le premier récepteur de lumière (11) devient inférieure ou égale à un courant nominal (38a) du premier récepteur de lumière (11) lorsque l'intensité de la lumière ambiante (91) est élevée, et la commande visant à augmenter la valeur cible (31) est réalisée.

6. Dispositif de communication optique sous-marine sans fil (1) selon la revendication 2,
dans lequel le premier récepteur de lumière (11) comporte une pluralité d'éléments récepteurs de lumière (12), et
dans lequel le dispositif de commande (14) est configuré pour réaliser une commande afin d'ajuster indépendamment le gain de chacun de la pluralité d'éléments récepteurs de lumière (12), sur la base de la valeur de courant (30), qui est basée sur l'intensité de la lumière de communication (90) reçue par chacun de la pluralité d'éléments récepteurs de lumière (12), la valeur cible (31), et l'intensité de la lumière ambiante (91).

7. Dispositif de communication optique sous-marine sans fil (1) selon revendication 6, comprenant en outre :
une pluralité d'unités de conversion courant-tension (17a), chacune configurée pour transformer en tension un courant émis par chacun d'une pluralité d'éléments récepteurs de lumière (12),
dans lequel le dispositif de commande (14) est configuré pour réaliser une commande afin d'acquérir une valeur totale (33) des tensions émises par la pluralité d'éléments récepteurs de lumière (12) après un ajustement de gain et converties par la pluralité d'unités de conversion de courant-tension (17a), en tant que signal de la lumière de communication (90).

8. Dispositif de communication optique sous-marine sans fil (1) selon la revendication 2, comprenant en outre :
une unité de stockage (15) configurée pour stocker des informations de corrélation de valeur cible (34) indiquant une corrélation entre la valeur cible (31) de la valeur de courant (30), qui est basée sur l'intensité de la lumière de communication (90) reçue par le premier récepteur de lumière (11), et l'intensité de la lumière ambiante (91),
dans lequel le dispositif de commande (14) est configuré pour réaliser une commande afin d'ajuster la valeur cible (31), sur la base de l'intensité de la lumière ambiante (91) reçue par le second récepteur de lumière (13) et des informations de corrélation de valeur cible (34).

9. Dispositif de communication optique sous-marine sans fil (1) selon la revendication 1, comprenant en outre :
un boîtier (1a) conçu pour loger le premier récepteur de lumière (11), le second récepteur de lumière (13) et le dispositif de commande (14),
dans lequel chacun du premier récepteur de lumière (11) et du second récepteur de lumière (13) sont positionnés à l'intérieur du boîtier (1a) de telle sorte qu'une direction d'incidence de la lumière ambiante (91) est la même.

10. Dispositif de communication optique sous-marine sans fil (1) selon la revendication 1,
dans lequel le premier récepteur de lumière (11) comporte un tube photomultiplicateur, et
dans lequel le second récepteur de lumière (13) comporte une photodiode pouvant recevoir de la lumière d'une intensité supérieure à celle du tube photomultiplicateur.
